# EUROPEAN PATENT APPLICATION

(11) **EP 4 703 689 A1**
(43) Date of publication of application: **04.03.2026**
(21) Application number: 25193882.5
(22) Date of filing: 04.08.2025
(51) Int. Cl.: G01C 23/00, G08G 5/51, B64D 43/00

(54) **SYSTEM AND METHOD FOR VISUALIZING A PREDICTED PATH OF AN AIRCRAFT**

(30) Priority: 27.08.2024 US 202418816628
(71) Applicant: Honeywell International Inc., Charlotte, NC 28202 (US)
(72) Inventor: CHEN, Hao, Charlotte, 28202 (US); QIN, Zhihao, Charlotte, 28202 (US); ZHAO, Kanglin, Charlotte, 28202 (US); LIU,, Shuheng, Charlotte, 28202 (US); ZHAO, Dinan, Charlotte, 28202 (US)
(74) Representative: Ingrassia, Fisher & Lorenz UK Ltd.

(57) **Abstract**

Systems and methods are provided for visualizing predicted paths of aircraft during taxiing that promote awareness of the pilot regarding potential collisions along the predicted paths. The systems include a database and a controller in operable communication with a GPS receiver, a steering system, the database, and a display device. The controller is configured to receive GPS coordinates from the GPS receiver, a front wheel steering angle from the steering system, aircraft and aerodrome data from the database, determine a predicted path of the aircraft in real-time while the aircraft is taxiing at the airport based on the GPS coordinates, the front wheel steering angle, and state parameters indicated by the aircraft data, and generate a visual representation of the predicted path on the display device, wherein the visual representation includes boundaries defined by tips of wings of the aircraft along the predicted path.

## Description

### TECHNICAL FIELD

The present invention generally relates to aircraft safety during a taxiing phase, and more particularly relates to systems and methods for aircraft capable of visualizing a predicted path of the aircraft during the taxiing phase, and, in some examples, predicting potential collisions along the predicted path and generating warnings in response to detection of such potential collisions.

### BACKGROUND

During the taxiing phase, aircraft may travel along various taxiways at an airport, potentially taking several turns along the taxi path. Pilots must use caution during the taxiing phase to ensure that the aircraft does not collide with other aircraft, vehicles, equipment on the ground or static fixtures (e.g., light poles, buildings, etc.). However, as the size of aircraft increases, it may become more challenging for pilots to accurately judge, for example, wingtip clearance from other aircraft or static fixtures.

Hence, it would be desirable for systems and methods to be available that are capable of assisting pilots during the taxiing phase to reduce the likelihood of collisions. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various examples, a system for an aircraft is provided that includes a database that includes aerodrome data indicative of positions of static fixtures at an airport and aircraft data indicative of state parameters of the aircraft, and a controller in operable communication with a GPS receiver of the aircraft, a steering system of the aircraft, the database, and a display device of the aircraft. The controller is configured to, by one or more processors, receive the GPS coordinates of the aircraft from the GPS receiver, the front wheel steering angle of the aircraft from the steering system, receive the aircraft data from the database, and receive the aerodrome data from the database, determine a predicted path of the aircraft in real-time while the aircraft is taxiing at the airport based on, at least in part, the GPS coordinates, the front wheel steering angle, and the state parameters of the aircraft, and generate a visual representation of the predicted path on the display device, wherein the visual representation includes boundaries defined by tips of wings of the aircraft along the predicted path.

In various examples, an aircraft is provided that includes a global positioning system (GPS) receiver configured to receive GPS coordinates of the aircraft, a steering system configured for adjusting a front wheel steering angle of a front wheel assembly of the aircraft to steer the aircraft on the ground, a database that includes aerodrome data indicative of positions of static fixtures at an airport and aircraft data indicative of state parameters of the aircraft, a display device, and a controller in operable communication with the GPS receiver, the steering system, the database, and the display device. The controller is configured to, by one or more processors, receive the GPS coordinates of the aircraft from the GPS receiver, the front wheel steering angle of the aircraft from the steering system, the aircraft data from the database, and the aerodrome data from the database, determine a predicted path of the aircraft in real-time while the aircraft is taxiing at the airport based on, at least in part, the GPS coordinates, the front wheel steering angle, and state parameters of the aircraft, and generate a visual representation of the predicted path on the display device, wherein the visual representation includes boundaries defined by tips of wings of the aircraft along the predicted path.

In various examples, a method for an aircraft is provided that includes, by a controller having one or more processors, receiving global positioning system (GPS) coordinates of the aircraft from a GPS receiver onboard the aircraft, receiving a front wheel steering angle of a front wheel assembly of the aircraft from a steering system onboard the aircraft, receiving aircraft data indicative of state parameters of the aircraft from a database, receiving aerodrome data indicative of positions of static fixtures at an airport from the database, determining a predicted path of the aircraft in real-time while the aircraft is taxiing at the airport based on, at least in part, the GPS coordinates, the front wheel steering angle, and the state parameters of the aircraft, and generating a visual representation of the predicted path on a display device onboard the aircraft, wherein the visual representation includes boundaries defined by tips of wings of the aircraft along the predicted path.

Furthermore, other desirable features and characteristics of the system, aircraft, and method will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 schematically represents a mobile platform and components of an aircraft taxi track visualization and ground static obstacle collision warning system thereof in accordance with an embodiment;
FIG. 2 is a dataflow diagram illustrating operation of the aircraft taxi track visualization and ground static obstacle collision warning system of FIG. 1 in accordance with an embodiment;
FIG. 3 is a flowchart illustrating an exemplary method for detecting potential static obstacle collisions in accordance with an embodiment; and
FIG. 4 schematically represents a display onboard an aircraft that includes a taxi track visualization.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

Briefly, systems and methods are disclosed herein for mobile platforms that are configured to assist and/or promote awareness of pilots during the taxiing phase to promote ease of steering the mobile platforms and/or reduce the likelihood of collisions between the mobile platforms and static obstacles or fixtures. In some examples, the systems and methods are configured to generate a visual representation of a predicted path of the mobile platforms during movement thereof on the ground (e.g., a taxiing phase of an aircraft), predict potential collisions along the predicted path, and/or generate warnings in response to detection of such potential collisions.

The mobile platform may be any type of vehicle, such as but not limited to various types of aircraft. It should be noted that the term aircraft, as utilized herein, may include any manned or unmanned object capable of flight. Examples of aircraft may include, but are not limited to, fixed-wing aerial vehicles (e.g., propeller-powered or jet powered), unmanned aerial vehicles (UAVs), etc. For convenience, the systems and methods will be described in reference to a manned airplane; however, as noted the systems and methods are not limited to such application.

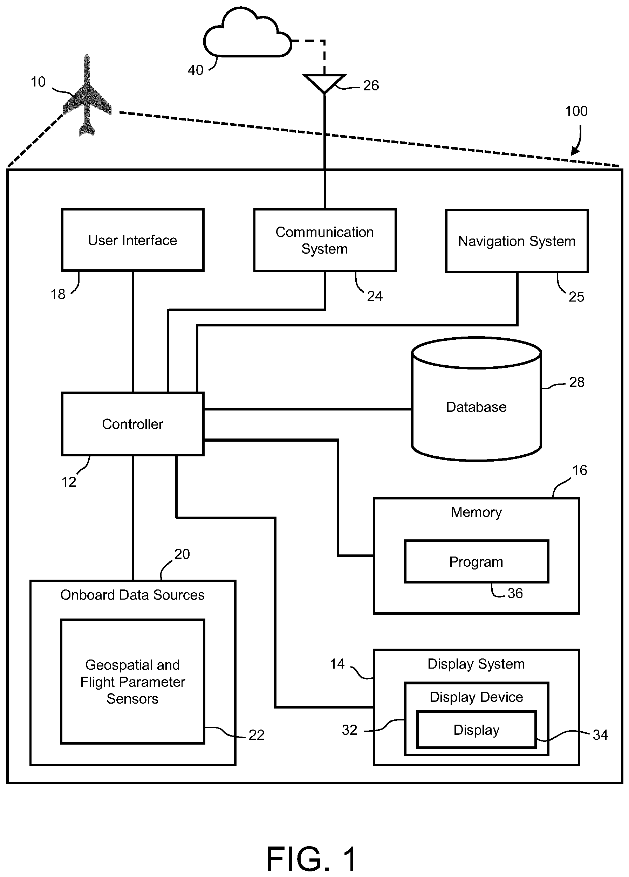

Referring now to FIG. 1, an aircraft 10, in this example an airplane, and certain systems thereof are illustrated in accordance with an exemplary and non-limiting embodiment of the present disclosure. An aircraft track visualization system 100 may be utilized onboard the aircraft 10 as described herein. As schematically depicted in FIG. 1, the system 100 includes and/or is functionally coupled to the following components or subsystems, each of which may assume the form of a single device or multiple interconnected devices, including, but not limited to, a controller 12 operationally coupled to: at least one display device 32, which may optionally be part of a larger on-board display system 14; computer-readable storage media or memory 16; an optional user interface 18, onboard data sources 20 including, for example, an array of geospatial and flight parameter sensors 22, and a navigation system 25. The system 100 may be separate from or integrated within a flight management system (FMS) and/or a flight control system (FCS). The system 100 may also contain a communication system 24 including an antenna 26, which may wirelessly transmit data to and receive data from various external sources 40 physically and/or geographically remote to the system 100 and/or the aircraft 10.

Although schematically illustrated in FIG. 1 as a single unit, the individual elements and components of the system 100 can be implemented in a distributed manner utilizing any practical number of physically distinct and operatively interconnected pieces of hardware or equipment. When the system 100 is utilized as described herein, the various components of the system 100 will typically all be located onboard the aircraft 10.

The term "controller," as appearing herein, broadly encompasses those components utilized to carry-out or otherwise support the processing functionalities of the system 100. Accordingly, the controller 12 can encompass or may be associated with any number of individual processors, flight control computers, navigational equipment pieces, computer-readable memories (including or in addition to the memory 16), power supplies, storage devices, interface cards, and other standardized components.

In various embodiments, the controller 12 includes at least one processor, a communication bus, and a computer readable storage device or media. The processor performs the computation and control functions of the controller 12. The processor can be any custom made or commercially available processor, a central processing unit (CPU), a graphics processing unit (GPU), an auxiliary processor among several processors associated with the controller 12, a semiconductor-based microprocessor (in the form of a microchip or chip set), any combination thereof, or generally any device for executing instructions. The computer readable storage device or media may include volatile and nonvolatile storage in read-only memory (ROM), random-access memory (RAM), and keep-alive memory (KAM), for example. KAM is a persistent or nonvolatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller 12. The bus serves to transmit programs, data, status and other information or signals between the various components of the aircraft 10. The bus can be any suitable physical or logical means of connecting computer systems and components. This includes, but is not limited to, direct hard-wired connections, fiber optics, infrared, and wireless bus technologies.

The instructions may include one or more separate programs, each of which comprises an ordered listing of executable instructions for implementing logical functions. The instructions, when executed by the processor, receive and process signals from the sensors 22, perform logic, calculations, methods and/or algorithms, and generate data based on the logic, calculations, methods, and/or algorithms. Although only one controller 12 is shown in FIG. 1, embodiments of the aircraft 10 can include any number of controllers 12 that communicate over any suitable communication medium or a combination of communication mediums and that cooperate to process the sensor signals, perform logic, calculations, methods, and/or algorithms, and generate data. In various embodiments, the controller 12 includes or cooperates with at least one firmware and software program (generally, computer-readable instructions that embody an algorithm) for carrying-out the various process tasks, calculations, and control/display functions described herein. During operation, the controller 12 may be programmed with and execute at least one firmware or software program, for example, a program 36, that embodies one or more algorithms, to thereby perform the various process steps, tasks, calculations, and control/display functions described herein.

The controller 12 may exchange data with one or more external sources 40 to support operation of the system 100 in various embodiments. In this case, bidirectional wireless data exchange may occur via the communication system 24 over a communications network, such as a public or private network implemented in accordance with Transmission Control Protocol/Internet Protocol architectures or other conventional protocol standards. Encryption and mutual authentication techniques may be applied, as appropriate, to ensure data security.

In various embodiments, the communication system 24 is configured to support instantaneous (i.e., real time or current) communications between on-board systems, the controller 12, and the one or more external sources 40. The communication system 24 may incorporate one or more transmitters, receivers, and the supporting communications hardware and software required for components of the system 100 to communicate as described herein. In various embodiments, the communication system 24 may have additional communications not directly relied upon herein, such as bidirectional pilot-to-ATC (air traffic control) communications via a datalink, and any other suitable radio communication system that supports communications between the aircraft 10 and various external source(s).

The memory 16 can encompass any number and type of storage media suitable for storing computer-readable code or instructions, such as the program 36, as well as other data generally supporting the operation of the system 100. As can be appreciated, the memory 16 may be part of the controller 12, separate from the controller 12, or part of the controller 12 and part of a separate system. The memory 16 can be any suitable type of storage apparatus, including various different types of direct access storage and/or other memory devices.

A source of information suitable for operating one or more systems of the aircraft 10 may be part of the system 100. In certain embodiments, the source is one or more databases 28 employed to receive and store map data, which may be updated on a periodic or iterative basis to ensure data timeliness. In various embodiments, the map data may include various terrain and manmade object locations and elevations and may be stored in the memory 16 or in the one or more databases 28, and referenced by the program 36. In various embodiments, these databases 28 may be available online and accessible remotely by a suitable wireless communication system, such as the communication system 24.

The sensors 22 supplies various types of data and/or measurements to the controller 12. In various embodiments, the sensors 22 supply, without limitation, one or more of: inertial reference system measurements providing a location, Flight Path Angle (FPA) measurements, airspeed data, groundspeed data, vertical speed data, vertical acceleration data, altitude data, attitude data including pitch and roll measurements, yaw data, data related to ownship weight, time/date information, heading information, data related to atmospheric conditions, flight path data, flight track data, radar altitude data, geometric altitude data, wind speed and direction data. Further, in certain embodiments of the system 100, the controller 12, and the other components of the system 100 may be included within or cooperate with any number and type of systems commonly deployed onboard aircraft including, for example, an FMS, an Attitude Heading Reference System (AHRS), an Instrument Landing System (ILS), and/or an Inertial Reference System (IRS).

With continued reference to FIG. 1, the display device 32 can include any number and type of image generating devices on which one or more avionic displays 34 may be produced. In various embodiments, the display device 32 may be affixed to the static structure of the aircraft 10 cockpit as, for example, a Head Down Display (HDD) or Head Up Display (HUD) unit. Alternatively, the display device 32 may assume the form of a movable display device (e.g., a pilot-worn display device) or a portable display device, such as an Electronic Flight Bag (EFB), a laptop, or a tablet computer carried into the aircraft 10 cockpit by a pilot.

At least one avionic display 34 is generated on display device 32 during operation of the system 100. The term "avionic display" as used herein is synonymous with the terms "aircraft-related display" and "cockpit display" and encompasses displays generated in textual, graphical, cartographical, and other formats. The system 100 can generate various types of lateral and vertical avionic displays 34 on which symbology, text annunciations, and other graphics pertaining to flight planning are presented for a pilot to view. The display device 32 is configured to continuously render at least one avionic display 34 showing a terrain environment at a current location of the aircraft 10. The avionic display 34 generated and controlled by the system 100 can include alphanumerical input displays of the type commonly presented on the screens of multifunction control and display units (MCDUs), as well as Control Display Units (CDUs) generally. Specifically, certain embodiments of the avionic displays 34 include one or more two dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display.

In various embodiments, a human-machine interface, such as a touch screen display, is implemented as an integration of the user interface 18 and the display device 32. Via various display and graphics systems processes, the controller 12 may command and control the touch screen display generating a variety of graphical user interface (GUI) objects or elements, for example, buttons, sliders, and the like, which are used to prompt a user to interact with the human-machine interface to provide user input, and to activate respective functions and provide user feedback, responsive to received user input at the GUI element.

The navigation system 25 can provide navigation data associated with the aircraft's current position and flight direction (e.g., heading, course, track, etc.) to the controller 12. As such, the navigation system 25 can include, for example, an inertial navigation system, a satellite navigation system (e.g., Global Positioning System) receiver, VLF/OMEGA, Loran C, VOR/DME, DME/DME, IRS, aircraft attitude sensors, or the navigation information can come from a flight management system. The navigation data provided to the controller 12 can also include information about the aircraft's airspeed, ground speed, altitude (e.g., relative to sea level), pitch, and other important flight information. In any event, for this example embodiment, the navigation system 25 can include any suitable position and direction determination devices that are capable of providing the controller 12 with at least an aircraft's current position (e.g., in latitudinal and longitudinal form), the real-time direction (heading, course, track, etc.) of the aircraft in its flight path, and other important flight information (e.g., airspeed, altitude, pitch, attitude, etc.).

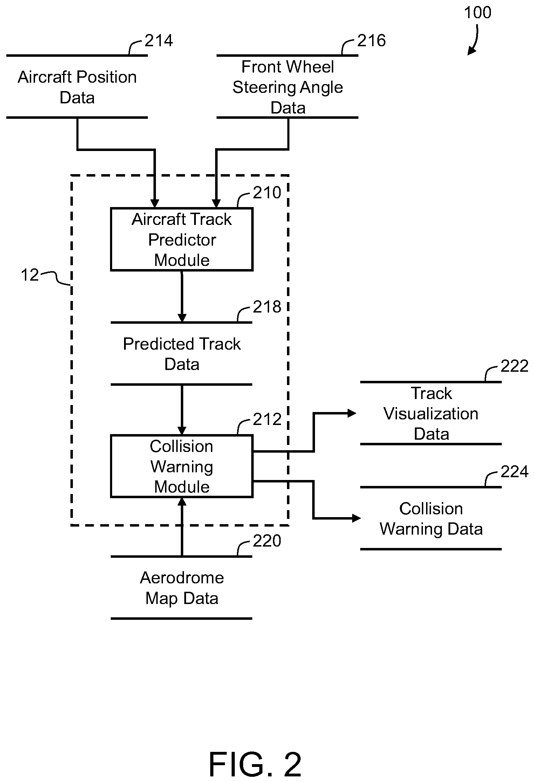

With reference to FIG. 2 and with continued reference to FIG. 1, a dataflow diagram illustrates elements of the system 100 of FIG. 1 in accordance with various embodiments. As can be appreciated, various embodiments of the system 100 according to the present disclosure may include any number of modules embedded within the controller 12 which may be combined and/or further partitioned to similarly implement systems and methods described herein. Furthermore, inputs to the system 100 may be received from other control modules (not shown) associated with the aircraft 10, and/or determined/modeled by other sub-modules (not shown) within the controller 12. Furthermore, the inputs might also be subjected to preprocessing, such as sub-sampling, noise-reduction, normalization, feature-extraction, missing data reduction, and the like. In various embodiments, the system 100 includes an aircraft track predictor module and a collision warning module.

In various embodiments, the aircraft track predictor module receives as input aircraft position data, for example, generated by a GPS receiver onboard the aircraft. The aircraft position data includes various data indicating a current position of the aircraft (e.g., GPS coordinates). In various embodiments, the aircraft track predictor module receives as input front wheel steering angle data generated by a steering system onboard the aircraft. The front wheel steering angle data includes various data indicating a steering angle of a front wheel assembly of the aircraft. The aircraft track predictor module processes the aircraft position data and the front wheel steering angle data, and in combination with state parameters of the aircraft (e.g., fuselage length, wingspan, etc.) uses kinematic equations to determine a predicted track of the aircraft, that is, a route that the aircraft (e.g., the front wheel) along which the aircraft will proceed if the current front wheel steering angle is maintained. The aircraft track predictor module generates predicted track data that includes various data indicating the predicted track of the aircraft.

In various embodiments, the collision warning module receives as input the predicted track data generated by the aircraft track predictor module. In various embodiments, the collision warning module receives as input aerodrome map data retrieved from one or more databases. The aerodrome map data includes various data indicating locations of static fixtures at airports. The collision warning module processes the predicted track data and the aerodrome map data, determines a path of the predicted track relative to the static fixtures of the airport, and determines whether the aircraft is likely to collide with any of the static fixtures while traveling along the predicted track. The collision warning module generates track visualization data that includes various data indicating the path of the predicted track in the airport. The collision warning module generates collision warning data that includes various data indicating whether the aircraft will or is likely to collide with one of the static fixtures of the airport. The collision warning module may transmit the track visualization data to the display device 32 of the display system 14 such that a visualization representing the predicted track is generated and displayed on the display 34. If a determination is made that the aircraft 10 is going to collide with one of the static fixtures, the collision warning module may transmit the collision warning data to the display system 14 and/or other components of the aircraft 10 (e.g., a speaker system) to generate a visual or audible warning to alert the crew to take corrective action. In some examples, the collision warning data may cause the display device 32 to generate and display a visual warning on the display 34.

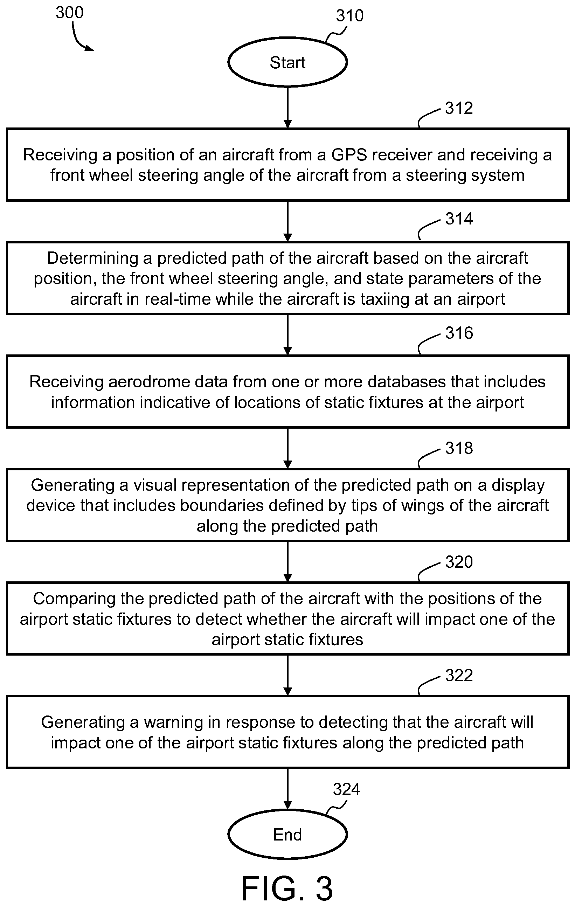

The systems disclosed herein, including the system 100, provide for methods of detecting impending aircraft collisions and generating warnings related thereto. For example, FIG. 3 is a flowchart illustrating an exemplary method 300. The method 300 may start at 310. In some examples, the method 300 initiates during the taxiing phase of an aircraft.

At 312, the method 300 may include receiving a position of the aircraft from an onboard system, such as GPS coordinates from a GPS receiver, and receiving a front wheel steering angle of the aircraft from a steering system onboard the aircraft.

At 314, the method 300 may include determining a predicted path of the aircraft based on the aircraft position, the front wheel steering angle, and various parameters of the aircraft (e.g., fuselage length, wingspan, etc.) in real-time while the aircraft is taxiing at an airport.

At 316, the method 300 may include receiving aerodrome data from one or more databases that includes information indicative of locations of static fixtures at the airport.

At 318, the method 300 may include generating a visual representation of the predicted path of the aircraft on a display device onboard the aircraft that includes boundaries of tips of the wings of the aircraft. In some examples, the visual representation may include a track boundary of a front wheel assembly of the aircraft.

At 320, the method 300 may include comparing the predicted path of the aircraft with the positions of the airport static fixtures to detect whether the aircraft will impact one of the airport static fixtures.

At 322, the method 300 may include generating a warning in response to detecting that the aircraft will impact one of the airport static fixtures along the predicted path.

The method 300 may end at 324.

In some examples, the method 300 may include generating, in response to a determination that the aircraft will potentially impact one of the airport static fixtures, an indication of whether the predicted impact is due to over-steering or under-steering of the aircraft.

In some examples, the method 300 may include assisting the pilot in maintaining the center of the aircraft along a centerline of a taxiway while taxiing the aircraft using the controller.

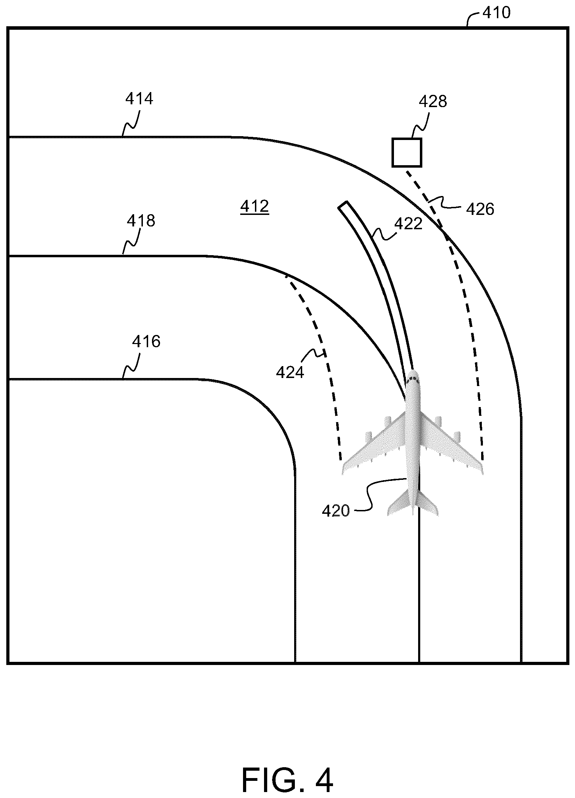

Referring now to FIG. 4, a display 410 showing a real-time representation of a portion of an airport relative to an aircraft 420 that includes an aircraft track visualization system, such as the system 100. At the current time represented on the display 410, the aircraft 420 is taxiing along a taxi path 412 defined between boundaries 414 and 416, and having a centerline 418. The system determines a predicted track of the aircraft 420 based on the position of the aircraft 420 (e.g., GPS coordinates), a front wheel steering angle, and state parameters of the aircraft 420. A visual representation of the predicted track is generated and shown on the display 410. In this example, the visual representation includes a front wheel track 422 indicating the predicted track relative to the front wheel assembly of the aircraft 420 and first and second wing tip tracks 424, 426 indicating the predicted path relative to and originating from the tips of the wings of the aircraft 420.

As represented, the second wing tip track 426 intersects with a static fixture 428 of the airport (e.g., a light post). Therefore, the corresponding wing of the aircraft 420 will collide with the static fixture 428 unless corrective action is performed. The system may generate a warning indicating to the crew of an impending collision. In some examples, the system may generate a notification to the crew indicating that the impending collision is due to understeering, that is, the front wheel steering angle is too small for the turn in the taxi path 412.

The systems and methods disclosed herein provide various benefits over certain existing systems and methods. For example, providing a visual representation of a predicted path of the aircraft can promote ease of maintaining a desired path for the aircraft while taxiing at an airport. Further, detection and warning of an impending collision between the aircraft and static fixture of the airport based on the predicted path may reduce a likelihood of aircraft ground collisions without a need for additional components onboard the aircraft.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for an aircraft, comprising:
a database that includes aerodrome data indicative of positions of static fixtures at an airport and aircraft data indicative of state parameters of the aircraft; and
a controller in operable communication with a global positioning system (GPS) receiver of the aircraft and a display device of the aircraft, a steering system of the aircraft, and the database, the controller configured to, by one or more processors:
receive GPS coordinates of the aircraft from the GPS receiver, a front wheel steering angle of a front wheel assembly of the aircraft from the steering system, the aircraft data from the database, and the aerodrome data from the database;
determine a predicted path of the aircraft in real-time while the aircraft is taxiing at the airport based on, at least in part, the GPS coordinates, the front wheel steering angle, and the state parameters of the aircraft; and
generate a visual representation of the predicted path on the display device, wherein the visual representation includes boundaries defined by tips of wings of the aircraft along the predicted path.

2. The system of claim 1, wherein the controller is configured to, by the one or more processors:
compare the predicted path of the aircraft with the positions of the static fixtures to detect an impending collision between the aircraft and one of the static fixtures; and
generate a warning in response to detecting the impending collision.

3. The system of claim 2, wherein the controller is configured to, by the one or more processors, generate, in response to detecting the impending collision, an indication of whether the impending collision is due to over-steering or under-steering of the aircraft.

4. The system of claim 1, wherein the visual representation includes a front wheel track of the front wheel assembly of the aircraft.

5. The system of claim 1, wherein the visual representation of the predicted path is overlaid on an additional visual representation of the airport that includes a taxiway and the static fixtures.

6. The system of claim 1, wherein the visual representation of the predicted path is displayed relative to and originating from another visual representation of the aircraft.

7. The system of claim 1, wherein the controller is configured to, by the one or more processors, assist a pilot in maintaining the front wheel assembly along a centerline of a taxiway of the airport while taxiing the aircraft along the taxiway.

8. A method for an aircraft, comprising:
receiving, by a controller having one or more processors, global positioning system (GPS) coordinates of the aircraft from a GPS receiver onboard the aircraft;
receiving, by the one or more processors of the controller, a front wheel steering angle of a front wheel assembly of the aircraft from a steering system onboard the aircraft;
receiving, by the one or more processors of the controller, aircraft data indicative of state parameters of the aircraft from a database;
receiving, by the one or more processors of the controller, aerodrome data indicative of positions of static fixtures at an airport from the database;
determining, by the one or more processors of the controller, a predicted path of the aircraft in real-time while the aircraft is taxiing at the airport based on, at least in part, the GPS coordinates, the front wheel steering angle, and the state parameters of the aircraft; and
generating, by the one or more processors of the controller, a visual representation of the predicted path on a display device onboard the aircraft, wherein the visual representation includes boundaries defined by tips of wings of the aircraft.

9. The method of claim 8, further comprising:
comparing, by the one or more processors of the controller, the predicted path of the aircraft with the positions of the static fixtures to detect an impending collision between the aircraft and one of the static fixtures; and
generating, by the one or more processors of the controller, a warning in response to detecting the impending collision.

10. The method of claim 9, further comprising generating, by the one or more processors of the controller, an indication of whether the impending collision is due to over-steering or under-steering of the aircraft in response to detecting the impending collision.

11. The method of claim 8, wherein the visual representation includes a front wheel track of the front wheel assembly of the aircraft.

12. The method of claim 8, further comprising overlaying, by the one or more processors of the controller, the visual representation of the predicted path on an additional visual representation of the airport that includes a taxiway and the static fixtures such that the visual representation of the predicted path is positioned relative to and originating from another visional representation of the aircraft.

13. The method of claim 8, further comprising assisting, by the one or more processors of the controller, a pilot in maintaining the front wheel assembly along a centerline of a taxiway of the airport while the aircraft is taxiing along the taxiway.
